# EUROPÄISCHE PATENTSCHRIFT

(11) **EP 1 086 520 B1**
(45) Veröffentlichungstag und Bekanntmachung des Hinweises auf die Patenterteilung: **20.12.2006**
(21) Anmeldenummer: 00920565.9
(22) Anmeldetag: 24.03.2000
(51) Int. Cl.: H02H 11/00, H03K 19/003

(54) **SCHUTZSCHALTUNG FÜR ELEKTRONISCHE BAUSTEINE, INSBESONDERE TREIBERBAUSTEINE**
PROTECTIVE CIRCUIT FOR ELECTRONIC MODULES, ESPECIALLY DRIVER MODULES
CIRCUIT DE PROTECTION DE MODULES ELECTRONIQUES, NOTAMMENT DE MODULES D'ATTAQUE

(30) Priorität: 12.04.1999 DE 19916321
(43) Veröffentlichungstag der Anmeldung: 28.03.2001
(73) Patentinhaber: Moeller GmbH, 53115 Bonn (DE)
(72) Erfinder: TILLENBURG, Dirk, D-50997 Köln (DE)
(86) Internationale Anmeldenummer: PCT/EP2000/002612
(87) Internationale Veröffentlichungsnummer: WO 2000/062395

(56) Entgegenhaltungen:
- US-A- 5 805 396

## Beschreibung

### Technisches Gebiet

Die Erfindung betrifft eine Schutzschaltung für elektronische Bausteine, insbesondere Treiberbausteine, nach dem Oberbegriff von Anspruch 1.

### Stand der Technik

Es ist allgemein üblich, Schutzdioden zum Schutz elektronischer Bausteine gegen die Verpolung der Versorgungsspannung zu verwenden. Dazu wird entweder in die Zuleitung des höherliegenden Versorgungspotentials (+Ub; Vcc) oder in die Rückleitung des tieferliegenden Versorgungspotentials (-Ub; GND; 0 V) eine bei richtiger Polung der Versorgungsspannung in Durchlaßrichtung gepolte Schutzdiode eingefügt. Im ersten Fall müssen die Lastströme aller Ausgänge des Bausteins den Weg über diese Schutzdiode nehmen, weshalb eine entsprechend groß bemessene und damit teure Schutzdiode vorzusehen ist. Dieser Nachteil tritt im zweiten Fall nicht auf, weswegen diese Anordnung der Schutzdiode vorzuziehen ist.

Bei elektronischen Bausteinen, insbesondere Treiberbausteinen, tritt mitunter der Fall auf, daß interne Widerstände zwischen den Ausgängen und dem Versorgungsanschluss für das tieferliegende Potential existieren. Das führt bei einem sogenannten Nullleiterbruch, d.h. einer Unterbrechung der Versorgungsleitung für das tieferliegende Versorgungspotential, zu einem parasitären Stromfluss über den Versorgungsanschluss des Bausteins, die internen Widerstände und die Ausgänge und schließlich über die Lasten nach dem tieferliegenden Versorgungspotential. Damit können an den Ausgängen des Bausteins undefinierte und instabile, d.h. unerwünschte Spannungspegel auftreten, womit die Sicherheit bei Nullleiterbruch nicht gewährleistet ist.

### Darstellung der Erfindung

Der Erfindung liegt daher die Aufgabe zugrunde, einen preiswerten Verpolungsschutz mit einem Schutz gegen Nullleiterbruch zu kombinieren.

Ausgehend von einer Schutzschaltung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Durch die erfindungsgemäße Anordnung der bekannten und einer weiteren Schutzdiode wird wirksam verhindert, daß sich bei einem Nullleiterbruch Ströme über die internen Widerstände und die äußeren Lasten herausbilden können. Der Baustein bleibt ausgangsseitig bei einer Unterbrechung der Versorgungsleitung für das tieferliegenden Versorgungspotential unabhängig vom Zustand der Eingangssignale in einem definierten, d.h. sicheren Zustand.

Unabhängig von der Anzahl der maßgeblichen Bausteine ist nur eine einzige erste Schutzdiode erforderlich.

Die Verwendung gleicher Schutzdioden verringert die Abhängigkeit der Schaltungsanordnung von Durchlaßspannungen, Durchlaßströmen, Sperrspannungen, Temperaturverhalten, Frequenzabhängigkeit usw. in entscheidendem Maße.

### Kurze Beschreibung der Zeichnungen

Weitere Einzelheiten und Vorteile der Erfindung ergeben sich aus dem folgenden, anhand von Figuren erläuterten Ausführungsbeispiel. Es zeigen
- Figur 1:: eine Schaltungsanordnung mit einer erfindungsgemäßen Schutzschaltung;
- Figur 2:: eine weitere Schaltungsanordnung mit einer vorteilhaften Weiterbildung der erfindungsgemäßen Schutzschaltung.

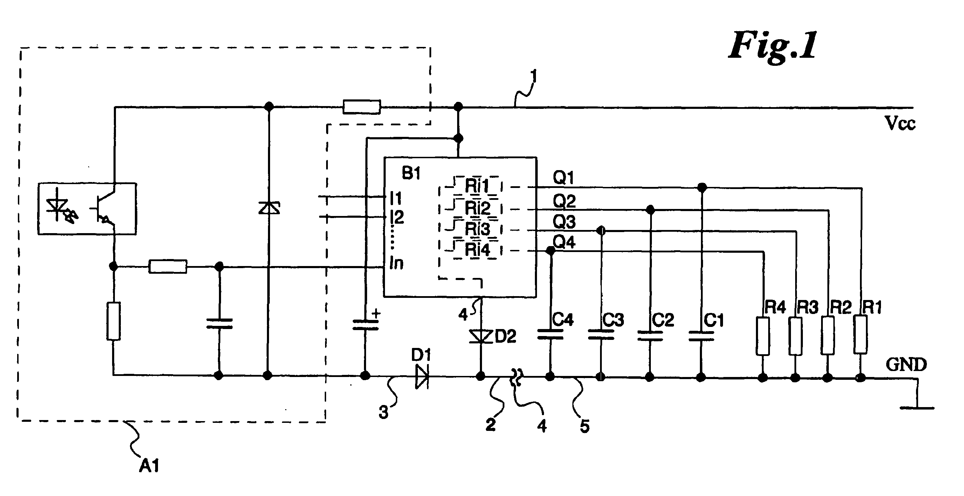

Die Schaltungsanordnung nach Fig. 1 enthält einen Treiberbaustein B1 mit vier Ausgängen Q1 bis Q4, über die Lastwiderstände R1 bis R4 und Lastkapazitäten C1 bis C4 angesteuert werden. Der Baustein B1 wird über seine Eingänge I1, I2 bis In durch vorgeschaltete Schaltungsteile in Form einer mehrfachen optoelektronischen Ansteuerschaltung A1 gesteuert, wie sie beispielhaft für den Eingang In zugeordnet dargestellt ist. Baustein B1 und Ansteuerschaltung A1 werden durch eine Versorgungsspannung versorgt, die zwischen einer ersten Zuleitung 1 für das höherliegende Versorgungspotential Vcc und einer zweiten Zuleitung 2 für das tieferliegende Versorgungspotential GND angelegt wird. Zwischen der zweiten Zuleitung 2 und der vom tieferliegenden Potential GND gespeisten dritten Zuleitung 3 für die Ansteuerschaltung A1 ist eine erste Schutzdiode D1 derart eingefügt, daß sie über ihre Kathode mit der zweiten Zuleitung 2 verbunden ist. Zwischen dem vom tieferliegenden Potential GND gespeisten Versorgungsanschluss 4 des Bausteins B1 und der zweiten Zuleitung 2 ist eine zweite Schutzdiode D2 derart eingefügt, daß sie ebenfalls über ihre Kathode mit der zweiten Zuleitung 2 verbunden ist. Bei falscher Polung (Verpolung) der Versorgungsspannung verhindern die Schutzdioden D2 und D1, daß schädliche bzw. zerstörende Potentiale weder zum Versorgungsanschluss 4 des Bausteins B1 noch über die dritte Zuleitung 3 zur Ansteuerschaltung A1 gelangen können. Sollte zwischen der zweiten Zuleitung 2 und der allgemeinen Versorgungsleitung 5 für GND eine Unterbrechung 4, beispielsweise durch Leiterbruch, eintreten, dann ist der Fall für den sogenannten Nullleiterbruch aufgetreten. In diesem Falle verhindert die Reihenschaltung der entgegengesetzt ausgerichteten Schutzdioden D1 und D2, daß parasitäre Ströme von der ersten Zuleitung 1 über die Ansteuerschaltung A1, den Versorgungsanschluss 4, interne Widerstände Ri1 bis Ri4 im Baustein B1, die Ausgänge Q1 bis Q4 und die Lastwiderstände R1 bis R4 zur allgemeinen Versorgungsleitung 5 abfließen können. Durch die erfindungsgemäße Schutzschaltung wird weiterhin verhindert, daß an den Ausgängen Q1 bis Q4 infolge des dynamischen Zusammenwirkens der internen Widerstände Ri1 bis Ri4 mit den Lastkapazitäten C1 bis C4 Schwingungen auftreten können.

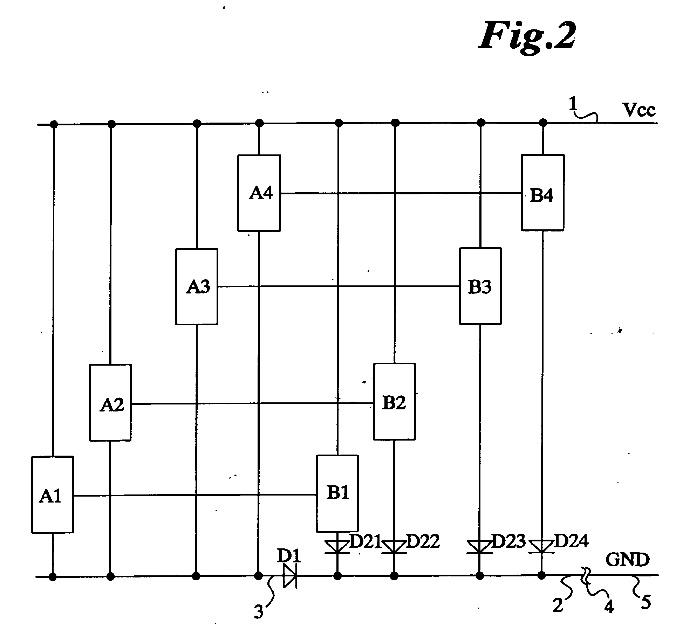

In Fig. 2 ist vereinfacht eine Schaltungsanordnung mit beispielhaft vier Treiberbausteinen B1 bis B4 und jeweils zugeordneten Ansteuerschaltungen A1 bis A4 dargestellt. Jedem Baustein B1 bis B4 ist jeweils eine zweite Schutzdiode D21 bis D24 zugeordnet. In der vom tieferliegenden Potential GND gespeisten gemeinsamen Zuleitung 3 für alle Ansteuerschaltungen A1 bis A4 ist allerdings nur eine einzige, gemeinsame erste Schutzdiode D1 erforderlich. Auch diese, die Schutzdioden D1, D21 bis D24 enthaltende Schutzschaltung stellt einen wirksamen Schutz sowohl gegen Verpolung der Versorgungsspannung als auch gegen einen Nullleiterbruch 4 zwischen der zweiten Zuleitung 2 und der allgemeinen Versorgungsleitung 5 dar.

## Patentansprüche

1. Schutzschaltung für elektronische Bausteine, insbesondere Treiberbausteine, mit einer in der Zuleitung (2) zu der allgemeinen Versorgungsleitung (5) für das tieferliegende Versorgungspotential (GND) bei richtiger Polung der Versorgungsspannung in Durchlaßrichtung angeordneten Schutzdiode, **dadurch gekennzeichnet,**
- **daß** in der vom tieferliegenden Versorgungspotential (GND) gespeisten Zuleitung (3) für dem Baustein (B1) vorgeschaltete Schaltungsteile (A1) eine erste Schutzdiode (D1) mit ihrer Kathode zum tieferliegenden Versorgungspotential (GND) führend angeordnet ist und
- **daß** in dem vom tieferliegenden Versorgungspotential (GND) gespeisten Versorgungsanschluss (4) des Bausteins (B1) eine zweite Schutzdiode (D2) mit ihrer Kathode zum tieferliegenden Versorgungspotential (GND) führend angeordnet ist.

2. Schutzschaltung nach Anspruch 1, **dadurch gekennzeichnet, daß** bei Vorhandensein mehrerer Bausteine (B1 ... B4) eine gemeinsame erste Schutzdiode (D1) vorgesehen und jedem Baustein (B1 ... B4) jeweils eine zweite Schutzdiode (D21 ... D24) zugeordnet ist.

3. Schutzschaltung nach Anspruch 1 oder 2, **dadurch gekennzeichnet, daß** erste und zweite Dioden (D1; D2) weitestgehend identisch sind.

## Claims

1. Protective circuit for electronic components, in particular driver modules, with a protective diode positioned in the feed line (2) to the general supply line (5) for the lower-lying supply potential (GND) where there is correct polarity of the supply voltage in the forward direction, **characterised**
**in that** a first protective diode (D1) leading with its cathode to the lower-lying supply potential (GND) is positioned in the feed line (3) for circuit parts (A1) connected upstream of the module (B1) and fed by the lower-lying supply potential (GND), and
**in that** a second protective diode (D2) leading with its cathode to the lower-lying supply potential (GND) is positioned in the supply connection (4) of the module (B1) fed by the lower-lying supply potential (GND).

2. Protective circuit according to claim 1, **characterised in that**, if there are a plurality of modules (B1 ... B4) present, a common first protective diode (D1) is provided and a second protective diode (D21 ... D24) is allocated to each module (B1 ... B4), respectively.

3. Protective circuit according to either claim 1 or claim 2, **characterised in that** the first and second diodes (D1; D2) are substantially identical.

## Revendications

1. Circuit de protection pour des modules électroniques, en particulier des modules d'entraînement, comportant une diode de protection agencée dans la conduite d'amenée (2) vers la conduite d'alimentation générale (5) pour le potentiel d'alimentation (GND) agencé au niveau d'un point plus bas par polarité appropriée de la tension d'alimentation dans la direction de passage, **caractérisé en ce que**
la conduite d'amenée (3) du module (B1) alimentée par le potentiel d'alimentation (GND) agencé au niveau d'un point plus bas contient des éléments de commutation agencés en amont (A1) et une première diode de protection (D1) avec sa cathode, menant vers le potentiel d'alimentation (GND) agencé au niveau d'un point plus bas; et
le raccordement d'alimentation (4) du module alimenté par le potentiel d'alimentation (GND) agencé au niveau d'un point plus bas comporte une deuxième diode de protection (D2) avec sa cathode menant vers le potentiel d'alimentation (GND) situé au niveau d'un point plus bas.

2. Circuit de protection selon la revendication 1, **caractérisé en ce que**, en présence de plusieurs modules (B1 ... B4), une première diode de protection commune (D1) est prévue et une deuxième diode de protection (D21 ... D24) est respectivement affectée à chaque module (B1 ... B4).

3. Circuit de protection selon les revendications 1 ou 2, **caractérisé en ce que** les première et deuxième diodes (D1; D2) sont pratiquement identiques.
